Europäisches Patentamt

European Patent Office

Office européen des brevets

(11) Veröffentlichungsnummer: **0 135 673**
**B1**

(12) **EUROPÄISCHE PATENTSCHRIFT**

(45) Veröffentlichungstag der Patentschrift: **12.09.90**

(51) Int. Cl.⁵: **G 01 B 11/00**

(21) Anmeldenummer: **84106356.3**

(22) Anmeldetag: **04.06.84**

(54) **Verfahren und Vorrichtung zur Festlegung einer Koordinate auf einer Oberfläche eines Festkörpers.**

(30) Priorität: **01.07.83 DE 3323836**

(43) Veröffentlichungstag der Anmeldung:
**03.04.85 Patentblatt 85/14**

(45) Bekanntmachung des Hinweises auf die
Patenterteilung:
**12.09.90 Patentblatt 90/37**

(84) Benannte Vertragsstaaten:
**CH DE FR GB LI NL**

(56) Entgegenhaltungen:
DE-A-1 941 547
DE-B-1 042 247
US-A-3 752 589
US-A-3 902 811
US-A-4 238 780

IBM TECHNICAL DISCLOSURE BULLETIN, Band
25, Nr. 4, September 1982, Seiten 1907-1909,
New York, US; C.H. LOCKE: "Surrogate
alignment tabs"

(73) Patentinhaber: **Siemens Aktiengesellschaft**
**Wittelsbacherplatz 2**
**D-8000 München 2 (DE)**

(72) Erfinder: **Müller, Karl-Heinz, Dr.**
**Holtheimer Weg 9**
**D-1000 Berlin 45 (DE)**

EP 0 135 673 B1

Courier Press, Leamington Spa, England.

**Beschreibung**

Die Erfindung betrifft ein Verfahren zur Bestimmung einer Koordinate auf der Oberfläche eines Festkörpers nach dem Oberbegriff des Patentanspruchs 1 sowie eine Vorrichtung zur Durchführung des Verfahrens nach dem Oberbegriff des Patentanspruchs 7.

Die Prüfung der Maßhaltigkeit von Strukturen auf der Oberfläche eines Festkörpers wird zunehmend schwieriger, da die Abmessungen der zu untersuchenden Oberflächen immer größer werden und die Strukturen auf den Oberflächen mit immer größerer Genauigkeit überprüft werden müssen. Beispielsweise wird bei der Überprüfung aufeinanderfolgender Strukturen auf einem Halbleiterwafer eine Genauigkeit von mehr als 0,1 µm verlangt. Dabei weisen diese Halbleiterwafer Abmessungen von beispielsweise 6'' = 150 mm auf.

Messungen von Koordinaten auf der Oberfläche eines Festkörpers mit einer Genauigkeit von 0,1 µm über eine Distanz von mehr als 10 cm zwischen einzelnen Koordinaten hinweg sind mit sehr aufwendigen Meßeinrichtungen mittels Laser-Interferenzen möglich. Diese Meßeinrichtungen sind sehr teuer und erfordern im allgemeinen speziell ausgestattete Meßräume und besonders ausgebildetes Fachpersonal.

Aus der US-A-3 752 589 ist eine Vorrichtung zur Ausrichtung eines Wafers bezüglich einer Maske bekannt. Als Ausrichthilfen dienen zwei auf der Maske und dem Wafer vorhandene Metallstrukturen, die durch horizontale Verschiebung der beiden Komponenten gegeneinander in dem mit Hilfe optischer Systeme erzeugten Überlagerungsbild zur Deckung gebracht werden.

Bei dem aus IBM Technical Disclosure Bulletin, Bd. 25, Nr. 4 (September 1982), Seite 1907 bis 1909 bekannten Verfahren zur Strukturierung einer auf einem Keramikkörper aufgebrachten Metallisierung wird der Körper durch mechanische Verschiebung bezüglich einer Maske ausgerichtet. Die Ausrichtung ist dann vollzogen, wenn die auf der Maske vorhandenen Marken mit den entsprechenden Marken auf der Unterseite des Keramikkörpers im Überlagerungsbild zusammenfallen.

Die EP-A-65 429 beschreibt ein Verfahren und eine Vorrichtung, mit denen Koordinaten auf der Oberfläche eines Festkörpers mit hoher Genauigkeit optisch gemessen werden können. Hierbei wird ein mit einem Gitter versehenes Referenzobjekt zusammen mit der zu untersuchenden Oberfläche des Festkörpers mit Hilfe eines Tisches unter Verwendung einer Laser-Interferometeranordnung verschoben. Das Gitter des Referenzobjekts weist außer parallelen Linien keine weitere Struktur auf, so daß es eine sehr einfache Periodizität mit dem Abstand zwischen zwei Linien als Periode aufweist. Ein Laserstrahl wird derart auf das Gitter gerichtet, daß dieser sich durch Beugung in zwei Teilstrahlen aufspaltet. Deren Überlagerung wird sodann ausgewertet. Die bekannte Vorrichtung besitzt den Nachteil, daß man die Koordinaten der zu untersuchenden Oberfläche des Festkörpers nicht absolut abgeben kann. Vielmehr können nur Abstände zwischen jeweils zwei Punkten auf der Oberfläche bestimmt werden. Dabei ergibt sich als weiterer Nachteil, daß man den Abstand zwischen den Punkten nur dadurch ermitteln kann, daß beim Verschieben der zu untersuchenden Oberfläche des Festkörpers zusammen mit dem Referenzobjekt die Anzahl derjenigen Gitterlinien errechnet werden muß, die gegen den Auftreffbereich des Laserstrahls auf dem Gitter des Referenzobjekts verschoben wurden.

Der vorliegenden Erfindung liegt die Aufgabe zugrunde, ein Verfahren und eine Vorrichtung der eingangs genannten Art anzugeben mit denen man Koordinaten auf der Oberfläche eines Festkörpers auch dann mit hoher Genauigkeit ermitteln kann, wenn diese Oberfläche sich in Ruhe befindet und nicht verschoben wird.

Diese Aufgabe wird erfindungsgemäß durch ein. Verfahren nach Patentanspruch 1 und eine Vorrichtung nach Patentanspruch 7 gelöst. Ausgestaltungen und Vorteile der Erfindung sind in den abhängigen Ansprüchen, der Beschreibung und den Zeichnungen angegeben.

Der mit der Erfindung erzielbare Vorteil besteht insbesondere darin, daß die Koordinaten auf der Oberfläche eines Festkörpers mit einer im Submikrometerbereich liegenden Genauigkeit bestimmt werden können. Hierbei ist keine Verschiebung des Festkörpers bezüglich der mit einem Koordinaten-Meßgitter versehenen Referenzfläche notwendig.

Ausführungsbeispiele der Erfindung sind in der Zeichnung dargestellt und werden im folgenden näher beschrieben.

Fig. 1 zeigt schematisch einen Schnitt durch ein erfindungsgemäßes Koordinaten-Referenzmikroskop.

Fig. 2 zeigt das Prinzip eines erfindungsgemäßen Koordinaten-Meßgitters.

Fig. 3 zeigt das Prinzip zur erfindungsgemäßen Ermittlung der Koordinaten eines Punktes auf der Oberfläche eines Festkörpers.

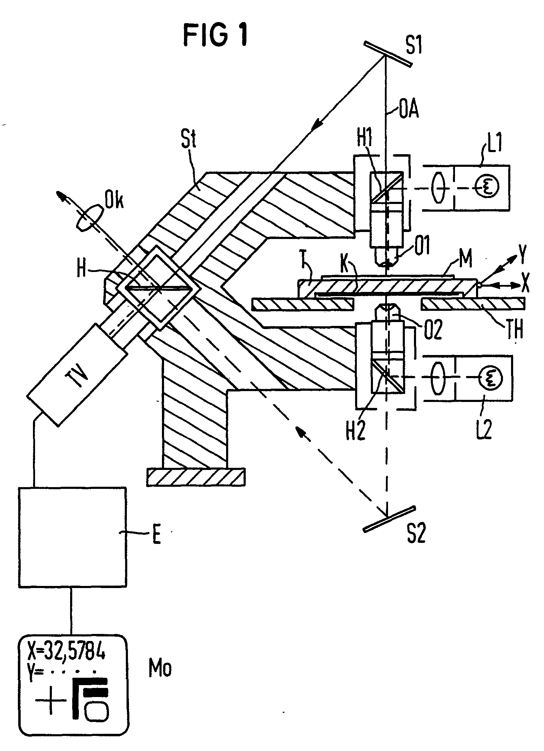

Fig. 1 zeigt schematisch einen Schnitt durch ein erfindungsgemäßes Koordinaten-Referenzmikroskop. In diesem Ausführungsbeispiel befindet sich planparallel zur auszumessenden Oberfläche eines Festkörpers M (beispielsweise eines Halbleiterwafers oder einer Maske, die zur Belichtung von Halbleiterwafern benötigt wird) ein Koordinaten-Meßgitter K. Dieses Koordinaten-Meßgitter K ist so angeordnet, daß auf ein und derselben optischen Achse OA von jeweils entgegengesetzten Seiten eine gleichzeitige mikroskopische Beobachtung von Meßobjekt (Festkörper M) und Koordinaten-Meßgitter K erfolgen kann.

Die Beobachtung der Oberfläche des Festkörpers M erfolgt über ein Objektiv 01. Die Beobachtung des Koordinaten-Meßgitters K erfolgt über ein Objektiv 02. Sowohl der Festkörper M als auch das Koordinaten-Meßgitter K sind auf einem Tisch T in bestimmten Positionen zueinander montiert. Dieser Tisch T ist gegen eine Tischhalterung TH in zwei Koordinaten-Richtungen eines kartesischen x-y-Koordinatensystems parallel zur Oberfläche des Festkörpers M verschiebbar.

In einer Lampe L1 wird Licht erzeugt, welches von einer Linse auf den Schnittpunkt eines halbdurchlässigen Spiegels H1 mit der optischen Achse OA fokussiert wird. An diesem Schnittpunkt wird Licht von der Lampe L1 umgelenkt und passiert entlang der optischen Achse OA durch das Objektiv 01 hindurch und beleuchtet am Auftreffpunkt auf der Oberfläche des Festkörpers M einen Teil dieser Oberfläche. Nach dem Auftreffen auf diesen Teil der Oberfläche des Festkörpers M wird ein Teil dieses Lichtes entlang der optischen Achse OA durch das Objektiv 01 hindurch reflektiert und an einem Umlenkspiegel S1 umgelenkt. Dieser reflektierte und umgelenkte Teil des Lichtes trifft auf einen halbdurchlässigen Spiegel H auf und wird dort in zwei Teilstrahlen aufgeteilt. Einer dieser beiden Teilstrahlen gelangt zu einem Okular Ok. Der andere dieser beiden Teilstrahlen wird von einer Fernsehkamera TV erfaßt.

In einer zweiten Lampe L2 wird ebenfalls Licht erzeugt, das wiederum mittels einer Linse auf den Schnittpunkt der optischen Achse OA mit einem halbdurchlässigen Spiegel H2 fokussiert wird. Von der Lampe L2 erzeugtes Licht gelangt nach der Reflexion an diesem halbdurchlässigen Spiegel H2 entlang der optischen Achse OA durch das Objektiv 02 und beleuchtet einen Bereich des Koordinaten-Meßgitters K. Bei dieser Beleuchtung eines Bereiches des Koordinaten-Meßgitters K wird ein Teil des Lichtes entlang der optischen Achse OA reflektiert und gelangt dabei auf einen Umlenkspiegel S2. Dieses reflektierte und umgelenkte Licht trifft ebenfalls auf den halbdurchlässigen Spiegel H. Dabei gelangt ein Teil auch dieses Lichtes zum Okular Ok. Der andere Teil dieses Lichtes wird ebenfalls von der Fernsehkamera TV erfaßt.

Sowohl im Okular Ok als auch in der Fernsehkamera TV kann man nunmehr eine Überlagerung der Abbildungen von jeweils einem Bereich sowohl der Oberfläche des Festkörpers M als auch von einem Bereich des Koordinaten-Meßgitters K erhalten. Da die Objektive 01 und 02 jeweils ein und dieselbe optische Achse OA aufweisen, liegen sich der abgebildete Bereich der Oberfläche des Festkörpers M und der abgebildete Bereich des Koordinaten-Meßgitters K jeweils um die optische Achse OA herum direkt gegenüber.

Die von der Fernsehkamera TV erfaßte Überlagerung von den beiden abgebildeten Bereichen auf einer Seite der Oberfläche des Festkörpers M und andererseits des Koordinaten-Meßgitters K wird in einer Bildauswerte-Elektronik E ausgewertet. Das Ergebnis dieser Auswertung kann auf einem Monitor Mo sichtbar gemacht werden. Das gesamte Koordinaten-Referenzmikroskop wird mittels eines Stativs St gehalten.

Befindet sich auf dem Koordinaten-Meßgitter K ein Maßstab, so kann mit Hilfe dieses Maßstabes in der Bildauswerte-Elektronik E direkt beispielsweise ein Abstand zwischen zwei Punkten auf der Oberfläche des Festkörpers M ermittelt werden.

Befindet sich auf dem Koordinaten-Meßgitter K ein absoluter Maßstab, so können in bezug auf diesen absoluten Maßstab beispielsweise auch die Koordinaten eines einzelnen Punktes auf der Oberfläche des Festkörpers M angegeben werden. Aus den Untersuchungen zur Justierung von Masken und Halbleiterwafern über lichtoptische Marken sind Methoden bekannt, wie die Lage von Linien in einem Beobachtungsfeld von 50μm auch automatisch mit einer Auflösung von unter 0,1μm gemessen werden können. Derartige Verfahren können hier ebenfalls eingesetzt werden.

Aus den Untersuchungen zur Herstellung von Masken mittels Elektronenstrahlschreiben ist es bekannt, wie Koordinaten-Meßgitter K mit der notwendigen Genauigkeit hergestellt werden können. Beispielsweise kann mit Hilfe eines Maskenschreibers eine solche für ein Koordinaten-Meßgitter K benötigte Struktur in einem Lack oder in einem Plexiglas erzeugt werden. Dabei wird mit Hilfe eines Maskenschreibers ein Mutterobjekt für ein solches Koordinaten-Meßgitter K hergestellt. Von einem solchen Mutterobjekt für ein Koordinaten-Meßgitter K können sodann beispielsweise mit Hilfe von Synchrotronstrahlung Kopien als Koordinaten-Meßgitter K erzeugt werden.

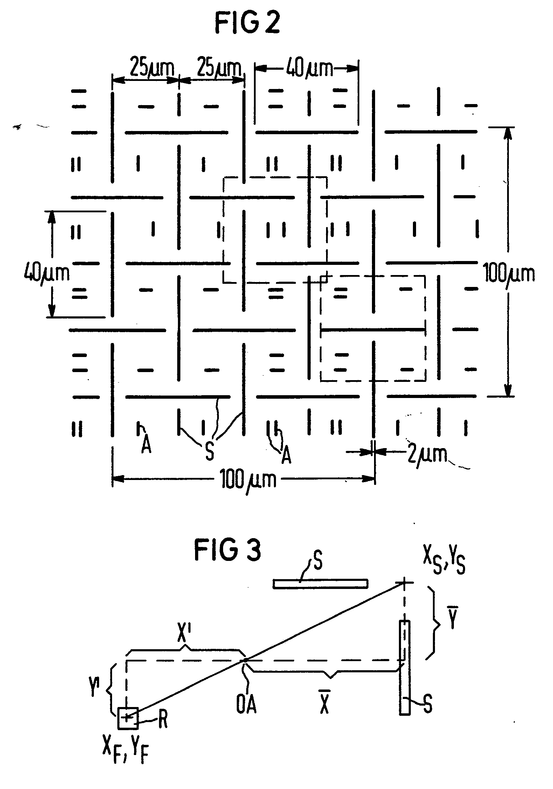

Fig. 2 zeigt das Prinzip eines Ausführungsbeispiels für ein Koordinaten-Meßgitter K. Fig.2 zeigt eine mögliche Strichanordnung für ein Meßgitter mit einer "Periodizität" von 25μm. Bei einer Strichanordnung nach Fig. 2 sind in einem Beobachtungsfeld, welches 40μm Kantenlänge aufweist, Ablesegenauigkeiten von besser als 0,1μm möglich. Ein solches Koordinaten-Meßgitter K kann auf einer Glasplatte von 150 mm Kantenlänge aufgebracht werden. Die Dicke der Linien S dieses Koordinaten-Meßgitters K beträgt 2μm.

Ein Koordinaten-Meßgitter K wird vorteilhafterweise in einem step-and-repeat-Verfahren hergestellt. Die Synchrotronstrahlungs-Lithografie ermöglicht eine preiswerte Herstellung von erfindungsgemäßen Koordinaten-Meßgittern K in einem step-and-repeat-Verfahren. Erfindungsgemäße Koordinaten-Meßgitter K können mit Hilfe von anderen Koordinaten-Meßeinrichtungen überprüft und ihre Fehler katalogisiert werden.

Die Anwendung der Erfindung ist nicht auf ein Ausführungsbeispiel nach Fig.1 beschränkt. Beispielsweise kann das erfindungsgemäße Referenzmeßprinzip auch für elektronenoptische Maskenschreibgeräte angewandt werden und könnte dabei vorteilhafterweise die gebräuchliche Laser-Interferenz-Tischsteuerung ersetzen. Das erfindungsgemäße Referenzmeßprinzip ist grundsätzlich auch für step-and-repeat-Belichtungsmaschinen aller Art geeignet. Vorteilhafterweise kann auch auf die Rückseite eines Festkörpers, beispielsweise eines Halbleiterwafers, eine Markierungsstruktur aufgebracht werden. Damit können vorteilhafterweise Justierungen für Belichtungen oder für sonstige Bearbeitungsvorgänge an einer Oberfläche eines Festkörpers durchgeführt werden.

Bei der Bearbeitung einer Oberfläche eines Festkörpers M kann ein und derselbe Lichtstrahl sowohl dazu verwendet werden, die Oberfläche dieses Festkörpers M zu bearbeiten als auch Teilbereiche der Oberfläche dieses Festkörpers M in erfindungsgemäßer Weise abzubilden. Auf diese Weise können bei der Auswertung der Abbildungen von der Oberfläche des Festkörpers M und der Referenzfläche K in der gleichen Bildauswerte-Elektronik E Zeit und Aufwand gespart werden.

Ein Detektor wie beispielsweise die Fernsehkamera TV kann z.B. 500 × 500 Detektorelemente aufweisen. Bei Anwendung von Submikrolithografie beträgt die Auflösung pro Detektorelement beispielsweise 0,1μm. Da der Detektor in einer Dimension beispielsweise 500 Detektorelemente aufweisen soll, beträgt die Gesamtauflösung des Detektors in einer Dimension 0,1μm × 500 = 50μm. Bei diesem Beispiel dürfen verschiedene Marken, die sich unmittelbar hintereinander auf der Referenzfläche (Koordinaten-Meßgitter K) befinden, höchstens einen Abstand von 50μm aufweisen. Um den Tisch T günstig führen zu können, ist es vorteilhaft, auf der Referenzfläche (Koordinaten-Meßgitter K) Grobkoordinaten zweidimensional anzuordnen, wobei in jeder Dimension jeweils zwei unmittelbar hintereinander angeordnete Grobkoordinaten einen Abstand von 100μm aufweisen. Preiswerte Verstelltische T sind für einen zweidimensionalen 100μm-Grobkoordinaten-Maßstab günstig im Handel zu erwerben. Bei einem zweidimensionalen 100μm-Grobkoordinaten-Maßstab auf der Referenzfläche (Koordinaten-Meßgitter K) ist es günstig, innerhalb von jeweils zwei aufeinanderfolgenden Grobkoordinaten Striches so anzuordnen, daß sie auf dem Koordinaten-Meßgitter K in jeder Dimension eine "Periodizität" von 25μm aufweisen und daß sie zugleich beispielsweise bei Anwendung einer Submikrolithografie eine Auflösung von besser als 0,1μm ermöglichen. Die nichtperiodischen Grobkoordinaten können beispielsweise durch unterschiedlich lange Striche oder durch unterschiedliche Ausgestaltungen von Strichen auf dem Koordinaten-Meßgitter K definiert werden.

Fig. 3 zeigt das Prinzip einer erfindungsgemäßen Ermittlung der Koordinaten eines Punktes auf einer Oberfläche eines Festkörpers M. Ein Bild nach Fig.3 erhält man beispielsweise dann auf einem Monitor Mo, wenn Abbildungen von der Oberfläche des Festkörpers M und vom Koordinaten-Meßgitter K auf dem Bildschirm des Monitors Mo überlagert werden. Durch die Striche bzw. Linien S bzw. A werden die absoluten Koordinaten $x_S$, $y_S$ eines Referenzpunktes auf dem Koordinaten-Meßgitter K definiert. Zur Ermittlung der Koordinaten $x_S$, $y_S$ dieses Referenzpunktes wird mit Hilfe der Bildauswerte-Elektronik E bei den Strichen bzw. Linien S bzw. A eine symmetrische Mittelung jeweils zwischen den beiden Kanten einer jeden Linie S bzw. A vorgenommen. Um das Signal-/Rausch-Verhältnis zu verbessern, erfolgen die Linienmessungen jeweils quer zur Linie S bzw. A. Auf diese Weise werden die x- und y-Koordinaten jeweils der Linienmitten erfaßt. Zu diesem Zweck kann beispielsweise ein mit einer Fernsehkamera TV erfaßtes Bild bezüglich der Kanten von Linien S bzw. A ausgewertet werden. Eine Auswertung der Linienmitten kann auch mit Hilfe eines in der Bildebene verschiebbaren Spaltes vorgenommen werden.

Ausgehend von absoluten Koordinaten $x_S$, $y_S$ eines Referenzpunktes auf dem Koordinaten-Meßgitter K werden mit Hilfe einer Auswerteelektronik E die absoluten Koordinaten $x_F$, $y_F$ eines Punktes auf der Oberfläche des Festkörpers M dadurch ermittelt, daß in bezug auf die Bildachse (optische Achse OA) die relativen Koordinaten $\bar{x}$, $\bar{y}$ des Referenzpunktes, der die absoluten Koordinaten $x_S$, $y_S$ besitzt, ermittelt werden und daß in bezug auf diese Bildachse OA die relativen Koordinaten x', y' dieses Punktes, dessen absolute Koordinaten angegeben werden sollen, ermittelt werden. Der Punkt auf der Oberfläche des Festkörpers M, dessen absolute Koordinaten ermittelt werden sollen, kann dadurch definiert werden, daß beispielsweise zwischen jeweils gegenüberliegenden Kanten einer Marke R gemittelt wird.

Als Objektive 01, 02 können Auflichtobjektive mit standardmäßig 36-facher Vergrößerung und einer Apertur von 0,5 verwendet werden.

Bei Durchführung eines erfindungsgemäßen Referenzmeßprinzips sind auch Dunkelfeldabbildungen möglich.

Ein Verfahren zur Ermittlung der Koordinatenlage eines Striches S bzw. A mittels elektronischer Auswertung von Fernsehbildern ist in der US-PS 4 238 780 beschrieben.

Auf einer Referenzfläche K sollen die Gitterstriche S nicht zu dicht beieinanderliegen, damit diese Gitterstriche genügend lang und gerade sein können. Zudem sollen diese Gitterstriche S genügend weit auseinanderliegen, damit die Ermittlung der Lage eines Gitterstriches S nicht dadurch gestört wird, daß andere Gitterstriche S allzu nahe benachbart sind. Andererseits sollen diese Gitterstriche S so dicht angeordnet sein, daß in jedem Gesichtsfeld des Auswertesystems für die Abbildungen mindestens ein Gitterstrich S zu erkennen ist. Die Größe des Gesichtsfeldes ist durch die gewünschte Auflösung von beispielsweise 0,1μm pro Detektorelement (pixel) vorgegeben. Beim heute üblichen Abstand von Fernsehzeilen bei einer Fernsehkamera TV ist ein Abstand von 25μm zwischen zwei solchen Gitterstrichen S günstig, die unmittelbar benachbart in zueinander parallelen Linien verlaufen.

Die Striche bzw. Linien S können allgemein als Balkenelemente bezeichnet werden. Diese Balkenelemente sollen nicht zu breit sein, um die virtuelle Mitte zwischen den Kanten dieser Balkenelemente mit hoher Genauigkeit ermitteln zu können. Andererseits erhalten diese Balkenelemente aus herstellungsbedingten Gründen eine endliche Breite. Aus diesen Gründen ist bei heute üblichen Herstellungsverfahren für solche Balkenelemente eine Breite von 2μm für diese Balkenelemente günstig.

Eine Referenzfläche K soll gerade, zueinander senkrecht angeordnete Balkenelemente in Form eines Kreuzgitters aufweisen. Diese Balkenelemente werden günstigerweise an Überkreuzungspunkten unterbrochen. Das von den Balkenelementen definierte Kreuzgitter weist zwischen den Balkenelementen Kreuzgitterfelder auf. Zur Unterscheidung verschiedener Kreuzgitterfelder werden günstigerweise verschiedene Hilfsmarkierungen A innerhalb von solchen Kreuzgitterfeldern angeordnet. Bei einem Abstand von Grobkoordinaten von 100µm ist es günstig, daß sich Hilfsmarkierungen A ebenfalls in einem Abstand von 100µm wiederholen. Hilfsmarkierungen A, die innerhalb von einem Kreuzgitterfeld angeordnet sind, ermöglichen die Festlegung einer Skalierung innerhalb von Kreuzgitterfeldern.

Da zwischen verschiedenen Detektorelementen bei der Auswertung von Abbildungen Intensitätsübergänge vorhanden sind, kann durch Interpolation die Gesamtauflösung besser sein als sie dem bloßen Abstand zwischen benachbarten Detektorelementen entsprechen würde.

Die Erfindung ermöglicht Winkeltreue und Geradheit bei einer Festlegung einer Koordinate auf einer Oberfläche eines Festkörpers M in zwei Dimensionen. Auf eine zweidimensionale Messung mit Hilfe einer Referenzfläche K kann man sich verlassen. Im Gegensatz dazu können beispielsweise bei einem Tisch T, der mit Hilfe eines Laserinterferometers geführt wird, trotz Eichung auf Orthogonalität und Geradheit der Bezugsspiegel Störungen beim zweidimensionalen Messen entstehen, weil ein solches zweidimensionales Messen mit Hilfe eines Laserinterferometer-Meßsystems aus einer Überlagerung von Messungen in zwei einzelnen Dimensionen besteht.

**Patentansprüche**

1. Verfahren zur Bestimmung einer Koordinate auf der Oberfläche eines Festkörpers (M) mit einer im Submikrometerbereich liegenden Genauigkeit, bei dem ein Teilbereich der Oberfläche des Festkörpers (M) unter Verwendung eines ersten optischen Systems (01) abgebildet wird, bei dem ein Teilbereich einer parallel zur Oberfläche des Festkörpers (M) ausgerichteten Referenzfläche (K) unter Verwendung eines zweiten optischen Systems (02) abgebildet wird und bei dem die von dem ersten und dem zweiten optischen System (01, 02) erzeugten Bilder überlagert werden,
dadurch gekennzeichnet, daß die mit einem Koordinaten-Meßgitter versehene Referenzfläche (K) und der Festkörper (M) fest auf einem Tisch (T) montiert werden, daß das Überlagerungsbild der Oberfläche des Festkörpers (M) und der Referenzfläche (K) einer Auswerteeinheit (E) zugeführt wird und daß die Lage eines Punktes auf der Oberfläche des Festkörpers (M) mit Hilfe des Koordinaten-Meßgitters bestimmt wird, wobei die Oberfläche des Festkörpers (M) sich in Ruhe befindet und nicht verschoben wird.

2. Verfahren nach Anspruch 1,
dadurch gekennzeichnet, daß die Referenzfläche (K) entlang der optischen Achse (OA) des zweiten optischen Systems (02) beleuchtet wird.

3. Verfahren nach Anspruch 1 oder 2,
dadurch gekennzeichnet, daß die Koordinaten $(\bar{x}, \bar{y})$ eines ersten Punktes auf der Referenzfläche (K) und die Koordinaten (x', y') eines zweiten Punktes auf der Oberfläche des Festkörpers (M) bezüglich der optischen Achse (OA) des ersten und zweiten optischen Systems (01, 02) ermittelt werden und daß hieraus die absoluten Koordinaten $(x_F, y_F)$ des zweiten Punktes bestimmt werden.

4. Verfahren nach einem der Ansprüche 1 bis 3,
dadurch gekennzeichnet, daß zur Überlagerung des Bildes der Referenzfläche (K) und des Bildes der Oberfläche des Festkörpers (M) ein halbdurchlässiger Spiegel (H) verwendet wird.

5. Verfahren nach einem der Ansprüche 1 bis 4, dadurch gekennzeichnet, daß das Überlagerungsbild einem dritten optischen System (OK) zur visuellen Beobachtung zugeführt wird.

6. Verfahren nach einem der Ansprüche 1 bis 5, dadurch gekennzeichnet, daß der Festkörper (M) zu dessen Bearbeitung in definierter Weise verschoben wird.

7. Vorrichtung zur Durchführung des Verfahrens nach Anspruch 1 mit einem ersten optischen System (01) zur Abbildung eines Teilbereichs der Oberfläche des Festkörpers (M), mit einem zweiten optischen System (02) zur Abbildung eines Teilbereichs einer parallel zur Oberfläche des Festkörprs (M) ausgerichteten Referenzfläche (K) und einer Einrichtung (H) zur Überlagerung der von dem ersten und dem zweiten optischen System (01, 02) erzeugten Bilder,
gekennzeichnet durch einen Tisch (T), auf dem der Festkörper (M) und die Referenzfläche (K) fest montiert sind, eine Bilderfassungseinheit (TV), eine daran angeschlossene Bildauswerteeinheit (E) zur Bestimmung der Lage eines Punktes auf der Oberfläche des Festkörpers (M) und ein auf der Referenzfläche (K) angebrachtes Koordinaten-Meßgitter, das eine Lagebestimmung erlaubt, ohne daß dabei die Oberfläche des Festkörpers (M) verschoben wird.

8. Vorrichtung nach Anspruch 7, dadurch gekennzeichnet, daß die Referenzfläche (K) auf der Rückseite des Festkörpers (M) angeordnet ist.

9. Vorrichtung nach Anspruch 7 oder 8, dadurch gekennzeichnet, daß die den Koordinatenmaßstab definierende Struktur gerade, senkrecht zueinander angeordnete Balkenelemente aufweist.

10. Vorrichtung nach Anspruch 9, dadurch gekennzeichnet, daß die Balkenelemente an den Überkreuzungspunkten unterbrochen sind.

11. Vorrichtung nach Anspruch 9 oder 10, dadurch gekennzeichnet, daß die Balkenelemente ein Kreuzgitterfeld bilden und daß eine Hilfsmakierung (A) innerhalb des Kreuzgitterfeldes angeordnet ist.

## Revendications

1. Procédé pour déterminer une coordonnée sur la surface d'un corps solide (M) avec une précision inférieure au micron, et selon lequel on forme l'image d'une zone partielle de la surface du corps solide (M) en utilisant un premier système optique (01), on forme l'image d'une zone partielle d'une surface de référence (K) orientée parallèlement à la surface du corps solide (M), en utilisant un second système optique (02) et on superpose les images produites par les premier et second systèmes optiques (01, 02), caractérisé par le fait qu'on installe la surface de référence (K) pourvue d'une grille de mesure à coordonnées et le corps solide (M) de façon fixe sur une table (A), qu'on envoie les images superposées de la surface du corps solide (M) et de la surface de référence (K) à une unité d'évaluation (E) et qu'on détermine la position d'un point sur la surface du corps solide (M) à l'aide de la grille de mesure à coordonnées, la surface du corps solide (M) étant au repos et n'étant pas déplacée.

2. Procédé suivant la revendication 1, caractérisé par le fait qu'on éclaire la surface de référence (K) le long de l'axe optique (OA) du second système optique (02).

3. Procédé suivant la revendication 1 ou 2, caractérisé par le fait qu'on détermine les coordonnées $(\bar{x}, \bar{y})$ d'un premier point sur la surface de référence (K) et les coordonnées (x', y') d'un second point sur la surface du corps solide (M) par rapport à l'axe optique (01) des premier et second systèmes optiques (01, 02) et qu'à partir de là, on détermine les coordonnées absolues ($x_F$, $y_F$) du second point.

4. Procédé suivant l'une des revendications 1 à 3, caractérisé par le fait qu'on utilise un miroir semi-transparent (H) pour superposer l'image de la surface de référence (K) et l'image de la surface du corps solide (M).

5. Procédé suivant l'une des revendications 1 à 4, caractérisé par le fait qu'on envoie les images superposées à un troisième système optique (OK) permettant une observation visuelle.

6. Procédé suivant l'une des revendications 1 à 5, caractérisé par le fait qu'on déplace le corps solide (M) de façon définie pour son usinage.

7. Dispositif pour la mise en oeuvre du procédé suivant la revendication 1, comportant un premier système optique (01) servant à former l'image d'une zone partielle de la surface du corps solide (M), un second système optique (02) servant à former l'image d'une zone partielle d'une surface de référence (K) orientée parallèlement à la surface solide (M), et un dispositif (H) pour superposer les images produites par les premier et second systèmes optiques (01, 02), caractérisé par une table (T) sur laquelle sont installés de façon fixe le corps solide (M) et la surface de référence (K), une unité de détection d'images (TV), une unité d'évaluation d'images (E) raccordée à l'unité de détection d'images et servant à déterminer la position d'un point sur la surface du corps solide (M), et une grille de mesure à coordonnées installée sur la surface de référence (K) et permettant une détermination de position sans déplacement de la surface du corps solide (M).

8. Dispositif suivant la revendication 7, caractérisé par le fait que la surface de référence (K) est disposée sur la face arrière du corps solide (M).

9. Dispositif suivant la revendication 7 ou 8, caractérisé par le fait que la structure définissant l'échelle des coordonnées possède des éléments en forme de traits rectilignes perpendiculaires entre eux.

10. Dispositif suivant la revendication 9, caractérisé par le fait que les éléments en forme de traits sont interrompus au niveau des points d'intersection.

11. Dispositif suivant la revendication 9 ou 10, caractérisé par le fait que les éléments en forme de traits forment un réseau en forme de grille, et que des marques auxiliaires (A) sont disposées à l'intérieur de la zone en forme de grille.

## Claims

1. Process for determining a coordinate on the surface of a solid-state body (M) with an accuracy lying in the submicrometre range, in which a subregion of the surface of the solid-state body (M) is imaged using a first optical system (01), in which a subregion of a reference surface (K) aligned parallel to the surface of the solid-state body (M) is imaged using a second optical system (02), and in which the images formed by the first and the second optical system (01, 02) are superposed, characterized in that the reference surface (K), which is provided with a coordinate measuring grid, and the solid-state body (M) are mounted firmly on a table (T), in that the superposition image of the surface of the solid-state body (M) and of the reference surface (K) is fed to an evaluation unit (E), and in that the position of a point on the surface of the solid-state body (M) is determined with the aid of the coordinate measuring grid, the surface of the solid-state body (M) being at rest and not being shifted.

2. Process according to Claim 1, characterized in that the reference surface (K) is illuminated along the optical axis (OA) of the second optical system (02).

3. Process according to Claim 1 or 2, characterized in that the coordinates (x, y) of a first point on the reference surface (K) and the coordinates (x', y') of a second point on the surface of the solid-state body (M) are determined with reference to the optical axis (OA) of the first and second optical system (01, 02) and in that the absolute coordinates ($x_F$, $y_F$) of the second point are determined herefrom.

4. Process according to one of Claims 1 to 3, characterized in that a semitransmissive reflector (H) is employed to superpose the image of the reference surface (K) and the image of the surface of the solid-state body (M).

5. Process according to one of Claims 1 to 4, characterized in that the superposition image is fed to a third optical system (OK) for visual observation.

6. Process according to one of Claims 1 to 5, characterized in that the solid-state body (M) is shifted in a defined fashion for its processing.

7. Device for carrying out the process according to Claim 1, comprising a first optical system (01) for imaging a subregion of the surface of the solid-state body (M), a second optical system (02) for imaging a subregion of a reference surface (K) aligned parallel to the surface of the solid-state body (M), and a device (H) for superposing the images formed by the first and by the second optical system (01, 02), characterized by a table (T), on which the solid-state body (M) and the reference surface (K) are mounted firmly, an image detection unit (TV), an image evaluation unit (E) connected thereto for determining the position of a point on the surface of the solid-state body (M), and a coordinate measuring grid, which is provided on the reference surface (K) and allows determination of position without the surface of the solid-state body (M) thereby being shifted.

8. Device according to Claim 7, characterized in that the reference surface (K) is arranged on the rear side of the solid-state body (M).

9. Device according to Claim 7 or 8, characterized in that the structure defining the coordinate scale has straight bar elements arranged perpendicular to one another.

10. Device according to Claim 9, characterized in that the bar elements are interrupted at the intersection points.

11. Device according to Claim 9 or 10 characterized in that the bar elements form a cross grid field and in that an auxiliary marking (A) is arranged inside the cross-grid field.

# FIG 1

# FIG 2

# FIG 3